# EUROPÄISCHE PATENTSCHRIFT

(11) **EP 1 853 780 B1**
(45) Veröffentlichungstag und Bekanntmachung des Hinweises auf die Patenterteilung: **15.09.2010**
(21) Anmeldenummer: 06723115.9
(22) Anmeldetag: 24.02.2006
(51) Int. Cl.: E05B 19/04, G07C 9/00, H01H 9/02

(54) **ELEKTRONISCHER SCHLÜSSEL**
ELECTRONIC KEY
CLE ELECTRONIQUE

(30) Priorität: 02.03.2005 DE 102005009405; 31.03.2005 DE 102005014563
(43) Veröffentlichungstag der Anmeldung: 14.11.2007
(73) Patentinhaber: Huf Hülsbeck & Fürst GmbH & Co. KG, 42551 Velbert (DE)
(72) Erfinder: GELDMACHER, Alexander, 42113 Wuppertal (DE)
(74) Vertreter: Mentzel, Norbert
(86) Internationale Anmeldenummer: PCT/EP2006/001745
(87) Internationale Veröffentlichungsnummer: WO 2006/092250

(56) Entgegenhaltungen:
- EP-A- 1 465 118
- DE-C1- 19 964 166
- US-A1- 2002 125 112

## Beschreibung

Die Erfindung richtet sich auf einen elektronischen Schlüssel, der als Identifikationsgeber codierte Signale zu einer Empfangseinheit in einem Fahrzeug sendet und/oder von der Empfangseinheit empfängt.

Aus der DE 199 64 166 C1 ist ein elektronischer Schlüssel bekannt. Hier haben die Tasten ein T-förmiges Querschnittsprofil, wo der T-Steg durch Löcher im Gehäuse ins Gehäuseinnere ragt und bei Betätigung des außerhalb des Gehäuses liegenden T-Balkens gegen den Betätiger eines Mikroschalters stößt. Dieser T-Balken ist mit einem abgesetzten Randvorsprung versehen, der im Montagefall der Tasten einen als gesonderter Teil an der Gehäuseaußenseite zu montierenden Haltering untergreift. Der am Haltering zur Anlage kommende Randvorsprung fungiert als obere Wegbegrenzung in Ruhelage der Tasten. Die T-Balken der Tasten sind von jeweils einem Federelement kraftbelastet, welches sich an der Oberfläche des Gehäuses abstützt. Außerdem befindet sich eine Abdichtungs-Membran im Gehäuseinneren, die zwischen den Betätigern der einzelnen Mikroschalter einerseits und den Stirnenden der T-Balken der Tasten andererseits verläuft. Es gibt auch eine untere Wegbegrenzung für die Betätigungslage des Tasters; indem die T-Balken bzw. die daran sitzenden Randvorsprünge an die Oberfläche des Gehäuses stoßen. Dieser elektronische Schlüssel besteht aus verhältnismäßig vielen Bauteilen, was seine Herstellung aufwendig und seine Montage umständlich macht.

Bei elektronischen Schlüsseln anderer Art, die keine eigenständigen formsteifen Tasten aufweisen, ist auch schon eine sogenannte Zwei-Komponenten-Technik (2K-Technik) angewendet worden. Hier wird eine als Weichkomponente dienende Membran mit dem als Hartkomponente verwendeten Gehäuse des Schlüssels baueinheitlich zu einem sogenannten 2K-Element hergestellt, welches aus einer Baueinheit Gehäuse-Membran besteht. Im einen Anwendungsfall wurde an diese Membran-Gehäuse-Baueinheit auch gleich eine plättchenförmige Taste als Hartkomponente in einer oder mehreren im Gehäuse vorgesehenen Öffnungen angeformt. Fertigungsbedingt entstanden bei dieser Ausführung zwischen den angeformten Tasten-Plättchen einerseits und dem Gehäuse andererseits große Spalte, in denen die darunter befindliche Membran einen U-förmigen Rollbalg bildete. Dieser große Spalt ist ein Schmutzfänger und beeinträchtigt das gute Aussehen des elektronischen Schlüssels.

Bei einer anderen Ausführungsform konnte man diesen großen Spalt in der Gehäuse-Membran-Baueinheit vermeiden, indem man in den Gehäuseöffnungen die Tasten erst nachträglich durch Klebemittel an den im Öffnungsbereich freiliegende Zonen der Membran befestigte. Diese Tasten konnten dann unabhängig von der Hartkomponente des Gehäuses ausgebildet sein und z.B. metallischen Charakter aufweisen. Die Schlüssel der beiden letztgenannten Ausführungsformen haben den Nachteil, dass die Tasten keine Wegbegrenzung aufweisen. Das beeinträchtigt die Formfestigkeit und die Haptik der Tasten dieser bekannten Schlüssel.

Aus der US 2002/125 112 A1 ist ein elektronischer Schlüssel gemäß dem Oberbegriff des Anspruchs 1 offenbart.

Der Erfindung liegt die Aufgabe zugrunde, einen zuverlässigen elektronischen Schlüssel der im Oberbegriff des Anspruches 1 angegebenen Art zu entwickeln, der aus weniger zu montierenden Bauteilen besteht. Dabei sollen die Tasten sowohl in ihrer Ruhelage als auch in ihrer Betätigungslage eine Wegbegrenzung aufweisen. Dies wird erfindungsgemäß durch die im Anspruch 1 angeführten Maßnahmen erreicht, denen folgende besondere Bedeutung zukommt.

Bei der Erfindung wird durch eine 2K-Spritzgusstechnik aus einer Weichkomponente eine Membran und aus einer Hartkomponente ein Rahmen an der Membran ausgebildet. Dieses Zwischenprodukt soll nachfolgend kurz "2K-Element" bezeichnet werden. In diesem 2K-Element fasst der Rahmen einerseits ein freies Membranfeld ein und erzeugt andererseits einen Innen-Anschlag für die Taste bzw. die Tasten. Dabei ist die Gehäuse-Öffnung so groß ausgebildet, dass die Taste mit ihrer ganzen Tasten-Betätigungsfläche von der Gehäuse-Innenseite aus in die Öffnung frei eingelegt werden kann. Die Lage der Tasten in diesen großen Gehäuse-Öffnungen wird durch das vorerwähnte 2K-Element gesichert, das im Montagefall mit seinem Rahmen an einer Innenfläche des Gehäuses anliegt. Ein Teilstück der Innenfläche an der Randzone des Gehäuses, welche die Gehäuse-Öffnungen umschließt, erzeugt zugleich den Außen-Anschlag für die Taste. Diese Randzonen-Innenfläche bildet also die obere Wegbegrenzung für den Ruhefall der Tasten im erfindungsgemäßen Schlüssel.

Weitere Maßnahmen und Vorteile der Erfindung ergeben sich aus den Unteransprüchen, der nachfolgenden Beschreibung und den Zeichnungen. In den Zeichnungen ist die Erfindung in einem Ausführungsbeispiel dargestellt. Es zeigen:
- Fig. 1: in starker Vergrößerung und im Längsschnitt ein Teilstück des elektronischen Schlüssels nach der Erfindung,
dessen für die Erfindung wichtigen Bestandteile in den nachfolgenden Fig. 2 bis 8 gezeigt sind. Es zeigen:
- Fig. 2: in perspektivischer Ansicht einen Oberteil des Gehäuses vom in Fig. 1 gezeigten Schlüssel,
- Fig. 3 - 5,: ebenfalls in perspektivischer Ansicht, drei Tasten, die von der Gehäuse-Innenseite aus in die Öffnungen des Gehäuse-Oberteils von Fig. 2 einzufügen sind,
- Fig. 6: in perspektivischer Darstellung ein mit den Bauteilen von Fig. 2 bis 5 zusammenwirkendes 2K-Element, das in einer sogenannten Zwei-Komponenten-Technik hergestellt worden ist,
dessen beide Komponenten, die nacheinander im gleichen Werkzeug hergestellt werden und somit als Einzelteile nicht vorliegen. Diese Komponenten sind in den Fig. 7 und 8 gezeigt, nämlich:
- Fig. 7: die Weichkomponente des 2K-Elements, die eine elastische, stellenweise topfartig profilierte Membran aufweist und
- Fig. 8: die Hartkomponente des 2K-Elements in Form eines Rahmens mit diversen umfangsseitigen und innenseitigen Stegen.

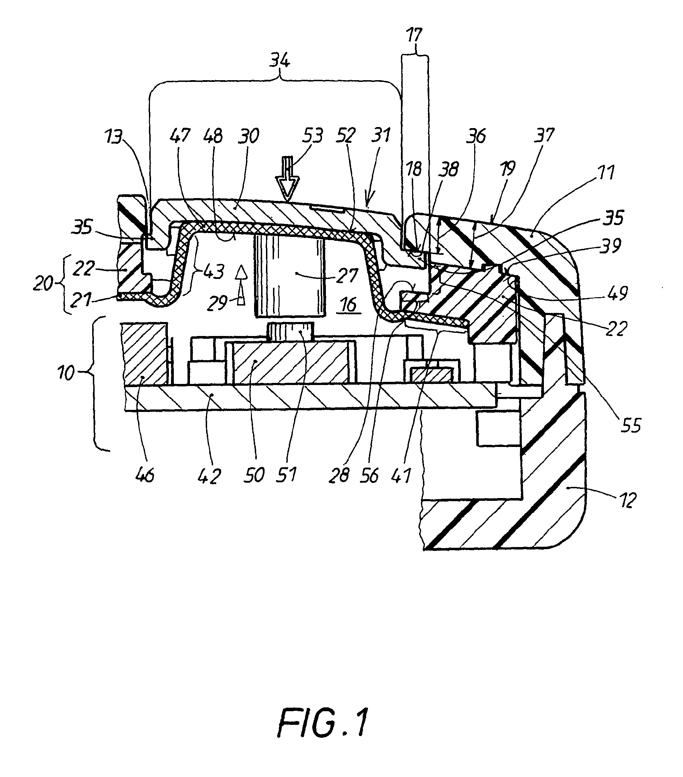

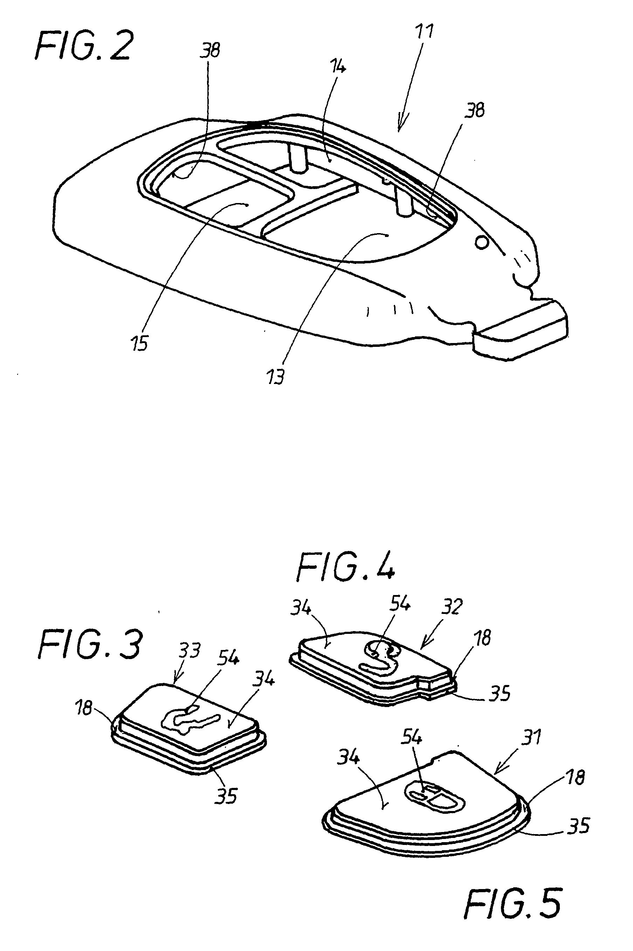

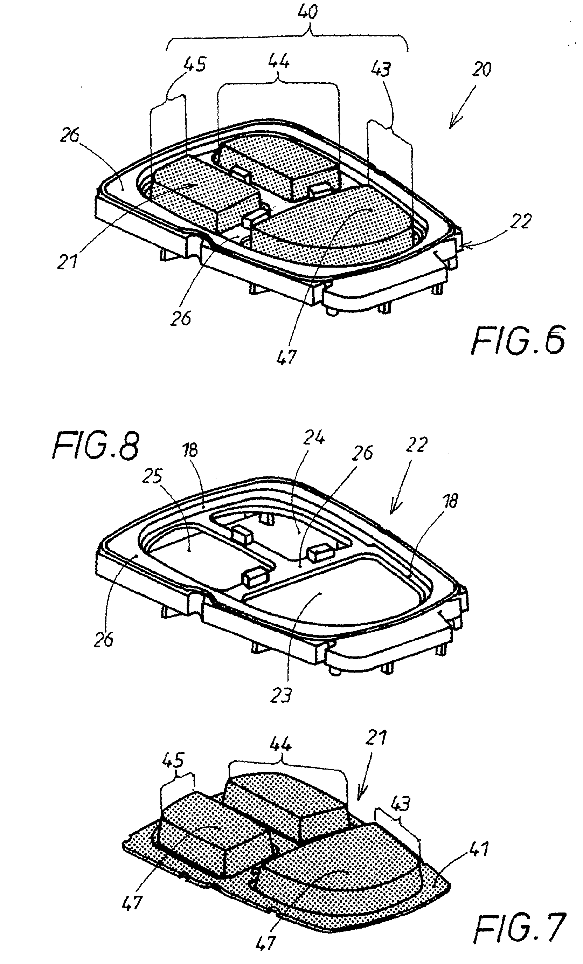

Abgesehen von den schematisch in Fig. 1 angedeuteten elektronischen Bauteilen 10 üblicher Art, brauchen beim Schlüssel nur folgende drei Bestandteile hergestellt und aneinander montiert zu werden. Das sind ein zweiteiliges Gehäuse 11, 12, mehrere Tasten 31 bis 33 und ein bereits erwähnten 2K-Element 20 gemäß Fig. 6. Der in Fig. 2 gezeigte Oberteil 11 des Gehäuses besitzt drei Öffnungen 13 bis 15, in welche jeweils eine von drei Tasten 31 bis 33 vom Gehäuseinneren 16 aus einlegbar sind. Die Tasten 31 bis 33 bestehen entweder aus metallischem Material 30 oder tragen eine metallische Beschichtung auf einem Kunststoffkern, deren prinzipieller Aufbau und Wirkungsweise anhand der Taste 31 von Fig. 1 näher erläutert werden soll.

Die Taste 31 besitzt eine Tasten-Betätigungsfläche 34, die bei bestimmungsgemäßem Gebrauch des Schlüssels manuell im Sinne des Betätigungspfeils 53 ins Gehäuseinnere 16 gegen eine durch einen Kraftpfeil 29 in Fig. 1 veranschaulichte Federkraft eingedrückt wird. Die Gehäuse-Öffnung 13 ist so groß ausgebildet, dass sie die ganze Tasten-Betätigungs-Fläche 34 umschließt. Die Öffnung 13 ist von einer Randzone 17 des Gehäuse-Oberteils 11 umschlossen, deren Innenfläche 18 als Außen-Anschlag für die Taste 31 in ihrer aus Fig. 1 ersichtlichen Ruhelage dient. An diesem Außen-Anschlag 18 kommt im Ruhefall nämlich ein abgesetzter Randvorsprung 38 zur Anlage. Der Randvorsprung 38 besteht, wie die Fig. 3 bis 5 besonders deutlich zeigen, aus einem im Umfangsbereich der einzelnen Tasten 31 bis 33 angeordneten Flansch 35, der mit Unterbrechungen versehen sein kann. Im Einzelnen empfiehlt es sich, diesen Bereich wie folgt zu gestalten.

Die Gehäuse-Innenfläche 18 der Öffnungs-Randzone 17 besitzt eine geringere Gehäuse-Stärke 36 als der Gehäusestärke 37 der benachbarten Gehäusebereiche entspricht. Dadurch entsteht gegenüber der benachbarten Innenfläche 39 des Gehäuse-Oberteils 11 eine höher gesetzte Gegenstufe an der als Außen-Anschlag fungierenden Gehäuse-Innenfläche 18 der Öffnungs-Randzone 17. Dabei ist der vom Flansch 35 erzeugte Randvorsprung so weit gegenüber der Tasten-Betätigungs-Fläche 34 zurückgesetzt, dass im Ruhefall von Fig. 1 die wirkende Federkraft 29 die Taste 31 im wesentlichen bündig mit der Außenfläche 19 des Gehäuse-Oberteils positioniert.

Das bereits erwähnte 2K-Element 20 besteht aus einer elastischen Weichkomponente, die in den Fig. 7 und 6 durch Punktschraffur hervorgehoben ist und, im späteren Montagefall eine durchgehende Membran im Gehäuseinneren 16 des Schlüssels erzeugt. Das 2K-Element 20 umfasst auch noch eine Hartkomponente 22, die nach der bereits erwähnten Zwei-Komponenten-Technik einstückig mit der Membran 21 hergestellt wird. Die Hartkomponente 22 besteht aus verhältnismäßig hartem Kunststoff und wird als Rahmen mit umfangsseitigen und im Rahmeninneren verlaufenden Stegen 26 ausgebildet. Zwischen diesen Stegen 26 entstehen drei Löcher 23 bis 25, denen folgende besondere Bedeutung zukommt.

Die profilierte Membran 21 ist mit drei topfartigen Wölbungen 43 bis 45 versehen, die aus einer sie umgrenzenden Membranebene 41 nach oben, geformt sind. Mittels der Membranebene 41 erfolgt die erforderliche Verbindung zwischen der Membran 21 und dem Rahmen 22 bei der einstückigen Herstellung des 2K-Elements 20. Die drei topfartigen Membran-Wölbungen 43 bis 45 durchragen dabei die erwähnten drei Löcher 23 bis 25 im Rahmen 22. Im 2K-Element entsteht ein freies Membranfeld 40 zwischen den Rahmen-Stegen 26, das aus den drei Membran-Wölbungen 43 bis 45 besteht. Die Membran-Wölbungen 43 bis 45 sind elastisch verformbar.

Wie bereits erwähnt wurde, werden die elektronischen Bauteile 10 im Gehäuseinneren 16 zwischen den beiden Gehäuseteilen 11, 12 auf einer Platine 42 in definierter Lage angeordnet. Zu den elektrischen Bauteilen 10 gehört ein an der Platine 46 befestigter Mikroschalter 50, der einen Betätiger 51 für seine Schalter-Kontakte besitzt. Es versteht sich, dass anstelle eines Mikroschalters 50, auch ein beliebiges anderes, an sich bekanntes Schaltelement verwendet werden könnte. Über den Mikroschalter 50 werden diverse, an der Platine 42 sitzende elektrische Elemente 46 wirksam bzw. unwirksam gesetzt. Dann findet eine mono- oder bi-direktionale Kommunikation zwischen dem elektronischen Schlüssel und entsprechenden Sendern und Empfängern im Fahrzeug statt, um bestimmte Funktionen im Fahrzeug auszuführen. Auf der sichtbaren Tasten-Betätigungsfläche 34 der Tasten 31 bis 33 sind entsprechende Hinweise, z.B. in Form von Symbolen 54, angebracht, aus denen die durch die Betätigung 53 hervorgerufene Funktion im Fahrzeug kundbar gemacht wird. Der Zusammenbau der vorgeschriebenen Bauteile läuft im Einzelnen wie folgt ab.

Nachdem die drei Tasten 31, 33 in ihre Gehäuse-Öffnungen 13 bis 15 eingelegt worden sind, wird ihre Lage durch das 2K-Element 20 gesichert. Die Rahmen-Oberkante 49 vom 2K-Element 20 kommt an der bereits erwähnten benachbarten Innenfläche 39 des Gehäuse-Oberteils 11 zur Anlage. Die Befestigung zwischen dem 2K-Element 20 und dem Gehäuseoberteil 11 kann in jeder, beliebigen Weise erfolgen. Geeignet sind dafür Verbindungen, die durch Kleben, Reibschweißen, Klipsen, Lasern und/oder durch Ultraschall erzeugt werden. Geeignete Vorsprünge und Vertiefungen zwischen den Berührungsflächen 39, 49 sorgen für einen exakten Sitz des Rahmens 20. Dabei kommt die Außenseite des von jeder Membran-Wölbung 43 bis 45 erzeugten Topfbodens 47 mit der Unterseite 52 der zugehörigen Taste 31 zur Anlage.

Wie Fig. 1 weiter zeigt, ist an der Innenseite 48 des Topfbodens 47 ein Stößel 27 angeformt. Im Montagefall gemäß Fig. 1 ist das Stirnende dieses Stößels 27 mit dem Betätiger 51 des Mikroschalters 50 ausgerichtet. Wird die Taste 31 im Sinne des in Fig. 1 eingezeichneten Betätigungspfeils 53 betätigt, so erzeugt die Weichkomponente im Bereich des freiliegenden Membranfelds 40 zumindest einen Teil der für die Tasten-Rückstellung maßgeblichen bereits erwähnten Federkraft 29. Beim Betätigen 53 verformt sich nämlich die zugehörige Membran-Wölbung 43.

Die vorgenannte Federkraft 29 zur Rückstellung der Taste 31 kann ganz oder teilweise auch von der dem Betätiger 51 des Mikroschalters 50 zugrunde liegenden, eigenen Rückstellkraft erzeugt werden. Diese Rückstellkraft des Schalter-Betätigers 51 kann unter Zwischenschaltung der Membran 21 des 2K-Elements einen Beitrag zur Federkraft 29 der zugehörigen Taste 31 bis 33 leisten.

Bei Betätigung 53 der jeweiligen Taste 31 ist ein Innen-Anschlag 28 wirksam, der die untere Wegbegrenzung der Taste 31 bestimmt. Dieser Innen-Anschlag 28 wird durch den Rahmen 22 des 2K-Elements 20 erzeugt. Dieser Innen-Anschlag 28 entsteht durch eine aus Fig. 1 erkennbare Stufe 55 in jenem Stegbereich 56 der vorgenannten Rahmen-Stege 26, der den Membran-Wölbungen 43 bis 45 im freiliegenden Membranfeld 40 zugekehrt ist. Der Innen-Anschlag 28 ist gegenüber der vorerwähnten Rahmen-Oberkante 49 abgesenkt.

### Bezugszeichenliste :

- 10: elektronische Bauteile (Fig. 1)
- 11: Gehäuse, Oberteil
- 12: Gehäuse, Unterteil
- 13: erste Gehäuseöffnung für 31 in 11 (Fig. 2)
- 14: zweite Gehäuseöffnung für 32 in 11 (Fig. 2)
- 15: dritte Gehäuseöffnung für 33 in 11 (Fig. 2)
- 16: Gehäuseinneres, Gehäuseinnenseite
- 17: Öffnungs-Randzone von 13 (Fig. 1)
- 18: Außen-Anschlag, Innenfläche von 17
- 19: Außenfläche von 11
- 20: 2K-Element
- 21: Weichkomponente von 20, Membran
- 22: Hartkomponente von 20, Rahmen
- 23: erstes Loch in 22 (Fig. 8)
- 24: zweites Loch in 22 (Fig. 8)
- 25: drittes Loch in 22 (Fig. 8)
- 26: Rahmen-Steg von 22 (Fig. 6, 8)
- 27: Stößel in 48 von 47 (Fig. 1)
- 28: Innen-Anschlag für 31
- 29: Pfeil der Federkraft (Fig. 1)
- 30: metallisches Material von 31 (Fig. 1)
- 31: erste Taste (Fig. 1, 5)
- 32: zweite Taste (Fig. 4)
- 33: dritte Taste (Fig. 3)
- 34: Tasten-Betätigungs-Fläche von 31
- 35: Flansch an 31 bis 33 (Fig. 3 bis 5)
- 36: Gehäuse-Stärke bei 17 (Fig. 1)
- 37: benachbarte Gehäuse-Stärke (Fig. 1)
- 38: Randvorsprung (Fig. 1)
- 39: zu 17 benachbarte Innenfläche von 11 (Fig. 1)
- 40: freies Membranfeld aus 43 bis 45 (Fig. 6)
- 41: Membranebene von 21 (Fig. 1, 7)
- 42: Platine (Fig. 1)
- 43: erste Membran-Wölbung (Fig. 7)
- 44: zweite Membran-Wölbung (Fig. 7)
- 45: dritte Membran-Wölbung (Fig. 7)
- 46: elektrische Elemente von 10 (Fig. 1)
- 47: Topfboden von 43 (Fig. 1, 6, 7)
- 48: Unterseite von 47 (Fig. 1)
- 49: Rahmen-Oberkante von 20 (Fig. 1)
- 50: Schaltelement, Mikroschalter (Fig. 1)
- 51: Schalter-Betätiger von 50 (Fig. 1)
- 52: Unterseite von 31 (Fig. 1)
- 53: Betätigungspfeil von 31, Betätigungshub (Fig. 1)
- 54: Symbole für 34 bis 37 (Fig. 3 bis 5)
- 55: Stufe in 56 für 28 (Fig. 1)
- 56: Stegbereich von 26 für 28 (Fig. 1)

## Patentansprüche

1. Elektronischer Schlüssel
mit wenigstens einer in sich formsteifen Taste (31 bis 33),
die einen gegenüber der Tasten-Betätigungs-Fläche (34) abgesetzten Randvorsprung (38) aufweist,
wobei die Taste (31 bis 33) in einer Öffnung (13 bis 15) eines Gehäuses (11) angeordnet ist,
die Taste (31 bis 33) beim Betätigen (53) auf den Betätiger (51) eines im Gehäuse-Inneren (16) sitzenden Schaltelements (50) einwirkt
und der Randvorsprung (38) der Taste (31 bis 35) im Ruhefall mit einem Außen-Anschlag (18) zusammenwirkt, der zur oberen Wegbegrenzung der Taste (31 bis 33) im Gehäuse (11, 12) dient, und im Betätigungsfall (53) gegen einen Innen-Anschlag (28) stößt, der die untere Wegbegrenzung der Taste (31 bis 33) bestimmt,
und mit einer beim Betätigen (52) der Taste (31 bis 33) sich nachgiebig verformenden Membran (21), die zwischen den Tasten (31 bis 33) und dem Betätiger (51) des Schaltelements (50) angeordnet ist,
wobei die Taste (31 bis 33) von der Innenseite (16) des Gehäuses (11) aus frei in die Gehäuse-Öffnung (13 bis 15) einlegbar ist,
wobei die Gehäuse-Öffnung (13 bis 15) so groß ausgebildet ist, dass sie die ganze Tasten-Betätigungs-Fläche (34) umschließt,
und wobei die Innenfläche der Randzone (17) des Gehäuses (11), welche die Gehäuse-Öffnung (13 bis 15) umschließt, den Außen-Anschlag (18) für die Taste (31 bis 33) bildet,
**dadurch gekennzeichnet,**
**dass** die Membran (21) die Weichkomponente eines Zwei-Komponenten-Elements (2K-Elements 20) ist, das in einer Zwei-Komponenten-Technik hergestellt wird,
**dass** die Hartkomponente des Zwei-Komponenten-Elements (20) aus einem Rahmen (22) besteht und mit seinen Rahmen-Stegen (26) mindestens ein freies Membranfeld (40) einfasst, und
**dass** der Rahmen (26) des Zwei-Komponenten-Elements (20) den Innen-Anschlag (28) für die Taste (31 bis 33) bildet.

2. Elektronischer Schlüssel nach Anspruch 1, **dadurch gekennzeichnet, dass** die Taste (31 bis 33) durch eine im Gehäuseinneren (16) befindliche Federkraft (29) in ihre Ruhelage gedrückt wird, wo der abgesetzte Vorsprung (28) der Taste (31 bis 33) am Außen-Anschlag (18) der Öffnungs-Randzone (17) vom Gehäuse (11) ruht.

3. Elektronischer Schlüssel nach Anspruch 2, **dadurch gekennzeichnet, dass** die Federkraft (29) von der Weichkomponente (21) des 2K-Elements (20) im freiliegenden Membranfeld (40) erzeugt wird, welches zwischen den Stegen (26) vom Rahmen (22) des Zwei-Komponenten-Elements (20) angeordnet ist.

4. Elektronischer Schlüssel nach Anspruch 3, **dadurch gekennzeichnet, dass** das Membranfeld (40) vom Zwei-Komponenten-Element 20) topfartig zur Taste (31 bis 33) hin gewölbt (43 bis 45) ist,
dass im Montagefall die Außenseite des von der Membran-Wölbung (43 bis 45) erzeugten Topfbodens (47) an der Unterseite (52) der Taste (31 bis 33) anliegt
und dass beim Betätigen (53) der Taste (31 bis 33) die Membran-Wölbung (43 bis 45) elastisch nachgiebig eindrückbar ist und **dadurch** mindestens einen Teil der zum Rückstellen der Taste (31 bis 33) dienenden Federkraft (29) erzeugt.

5. Elektronischer Schlüssel nach Anspruch 4, **dadurch gekennzeichnet, dass** an der Unterseite (48) vom Topfboden (47) der Membran-Wölbung (43 bis 45) ein Stößel (27) angeformt ist, der den Betätigungshub (53) der Taste (31 bis 33) auf den Betätiger (51) des Mikroschalters (50) überträgt.

6. Elektronischer Schlüssel nach einem der Ansprüche 2 bis 5, **dadurch gekennzeichnet, dass** die Federkraft (29) für die Taste (31) wenigstens teilweise durch die dem Schaltelement (50) innewohnende Rückstellkraft des Betätigers (51) erzeugt wird.

7. Elektronischer Schlüssel nach einem der Ansprüche 1 bis 6, **dadurch gekennzeichnet, dass** der Innen-Anschlag (28) durch eine Stufe (55) in jenem Stegbereich (56) des Rahmens (22) gebildet ist, der an das freiliegende Membranfeld (40) des Zwei-Komponenten-Elements (20) angrenzt
und dass die anschlagwirksame Stufe (55) gegenüber der Rahmen-Oberkante (49) des Zwei-Komponenten-Elements (20) abgesenkt ist.

8. Elektronischer Schlüssel nach einem der Ansprüche 1 bis 7, **dadurch gekennzeichnet, dass** im Montagefall das Zwei-Komponenten-Element (20) mit seiner Rahmen-Oberkante (49) an einer Innenfläche (39) des Gehäuses (11) anliegt.

9. Elektronischer Schlüssel nach einem der Ansprüche 1 bis 8, **dadurch gekennzeichnet, dass** der Außen-Anschlag (18) an der Innenfläche von der Randzone (17) der Gehäuse-Öffnung (13 bis 15) aus einer Gegenstufe besteht,
die durch eine Minderung der Gehäuse-Stärke (36) dieser Randzone (17) gegenüber benachbarten Gehäusebereichen (37) erzeugt ist.

10. Elektronischer Schlüssel nach einem der Ansprüche 1 bis 9, **dadurch gekennzeichnet, dass** die Taste (31 bis 33) wenigstens stellenweise am Umriss ihrer Tasten-Betätigungs-Fläche (34) einen abgesetzten Flansch (35) aufweist, der als Randvorsprung (38) fungiert und im Ruhefall am Außen-Anschlag (18) des Gehäuses (11) anliegt.

11. Elektronischer Schlüssel nach Anspruch 10, **dadurch gekennzeichnet, dass** der Flansch (35) so weit abgesetzt ist, dass die Tasten-Betätigungs-Fläche (34) im Ruhefall im Wesentlichen bündig mit der angrenzenden Außenfläche (19) des Gehäuses (11) angeordnet ist.

12. Elektronischer Schlüssel nach einem der Ansprüche 1 bis 11, **dadurch gekennzeichnet, dass** die eigenständigen Tasten (31 bis 33) aus metallischem Material (30) bestehen oder eine metallische Beschichtung aufweisen.

13. Elektronischer Schlüssel nach einem der Ansprüche 1 bis 12, **dadurch gekennzeichnet, dass** das Schaltelement aus einem Mikroschalter (50) besteht.

14. Elektronischer Schlüssel nach einem der Ansprüche 1 bis 12, **dadurch gekennzeichnet, dass** das Schaltelement aus einem Folienschalter besteht.

15. Elektronischer Schlüssel nach einem der Ansprüche 1 bis 12, **dadurch gekennzeichnet, dass** das Schaltelement aus einem Hallsensor besteht.

16. Elektronischer Schlüssel nach einem der Ansprüche 1 bis 12, **dadurch gekennzeichnet, dass** das Schaltelement aus einem kapazitiven Sensor besteht.

17. Elektronischer Schlüssel nach einem der Ansprüche 1 bis 12, **dadurch gekennzeichnet, dass** das Schaltelement aus einem Druck-Kraft-Sensor, nämlich ein sogenanntes Piezoelement, besteht.

18. Elektronischer Schlüssel nach einem der Ansprüche 1 bis 12, **dadurch gekennzeichnet, dass** das Schaltelement aus einem Schnappschalter besteht.

19. Elektronischer Schlüssel nach einem der Ansprüche 1 bis 12, **dadurch gekennzeichnet, dass** das Schaltelement aus einer Schaltmatte besteht.

20. Elektronischer Schlüssel nach einem der Ansprüche 1 bis 19, **dadurch gekennzeichnet, dass** das Zwei-Komponenten-Element (20) durch Kleben, Reibschweißen, Klipse, Lasern und/oder durch Ultraschall am Gehäuseoberteil (11) befestigt ist.

## Claims

1. Electronic Key
with at least one, of itself, stiff on demolding push-button (31 to 33),
exhibiting opposite the push-button activation surface (34) an offset rim ledge (38),
whereby the push-button (31 to 33) is arranged in an opening (13 to 15) of a housing (11);
the push-button (31 to 33), when operated (53), acts upon the activator (51) of a switching element (50) located in the housing interior (16),
and the rim ledge (38) of the push-button (31 to 35), when not in operation, interacts with an exterior arrester (18) which serves as upper path limitation of the push-button (31 to 33) in the housing (11, 12), and when operated (53) impacts against an interior arrester (28) which defines the lower path limitation of the push-button (31 to 33);
and with-upon activating (52) the push-button (31 to 33)-an elastically morphing diaphragm (21) arranged between the push-button (31 to 33) and the activator (51) of the switching element (50),
whereby from the interior (16) of the housing (11) the push-button (31 to 33) can be freely inserted into the housing opening (13 to 15),
whereby the housing opening (13 to 15) is designed to be big enough to accommodate the entire push-button activation surface (34),
and whereby the inner surface of the housing's (11) rim zone (17), which surrounds the housing opening (13 to 15), forms the exterior arrester (18) for the push-button (31 to 33),
thereby **characterized in that**,
the diaphragm (21) is the soft component of a two-component element (2c-element 20) which is produced using two-component technology,
the hard component of the two-component element (20) comprises a frame (22) and encloses with its frame fillets (26) at least one exposed diaphragm field (40), and
the frame (26) of the two-component element (20) constitutes the inner arrester (28) for the push-button (31 to 33).

2. Electronic key pursuant to Claim 1, thereby **characterized in that** the push-button (31 to 33) is pushed into its rest position by means of a spring force (29) on hand in the housing interior (16), where the offset ledge (28) of the push-button (31 to 33) rests at the exterior arrester (18) of the rim zone (17) of the opening of the housing (11).

3. Electronic key pursuant to Claim 2, thereby **characterized in that** the spring force (29) is created in the free diaphragm field (40)-which is arranged between the fillets (26) of the frame (22) of the two-component element (20)-by the soft component (21) of the two-component element (20).

4. Electronic key pursuant to Claim 3, thereby **characterized in that** the diaphragm field (40) of the two-component element (20) is vaulted (43 to 45) pan-like towards the push-button (31 to 33),
when assembling, the exterior of the pan floor (47) created by the diaphragm vaulting (43 to 45) lies against the underside (52) of the push-button (31 to 33),
and when operating (53) the push-button (31 to 33), the diaphragm vaulting (43 to 45) can be pressed elastically inwards, and thereby generates at least a portion of the spring force (29) serving to reset the push-button (31 to 33).

5. Electronic key pursuant to Claim 4, thereby **characterized in that** on the underside (48) of the pan floor (47) of the diaphragm vaulting (43 to 45) a tappet (27) has been designed which transmits the activation stroke (53) of the push-button (31 to 33) to the activator (51) of the micro-switch (50).

6. Electronic key pursuant to one of the claims 2 to 5, thereby **characterized in that** the spring force (29) for the push-button (31) is at least partially generated by the reset force of the activator (51) intrinsic to the switching element (50).

7. Electronic key pursuant to one of the claims 1 to 6, thereby **characterized in that** the inner arrester (28) is formed by a step (55) **in that** fillet area (56) of the frame (22) which borders on the exposed diaphragm field (40) of the two-component element (20),
and the step (55) functioning as arrester is sunken opposite the top edge of the frame (49) of the two-component element (20).

8. Electronic key pursuant to one of the claims 1 to 7, thereby **characterized in that** during assembly, the two-component element (20) with the top edge of its frame (49) lies at an inner surface (39) of the housing (11).

9. Electronic key pursuant to one of the claims 1 to 8, thereby **characterized in that** the exterior arrester (18) at the inner surface of the rim zone (17) of the housing opening (13 to 15) comprises a contra step,
which is created by a reduction in the housing strength (36) of this rim zone (17) vis-à-vis adjacent housing areas (37).

10. Electronic key pursuant to one of the claims 1 to 9, thereby **characterized in that** the push-button (31 to 33) at least in places on the perimeter of its push-button activation surface (34) exhibits an offset flange (35) which functions as a rim ledge (38) and when in rest position lies at the exterior arrester (18) of the housing (11).

11. Electronic key pursuant to Claim 10, thereby **characterized in that** the flange (35) is offset to the extent that the push-button activation surface (34), when resting, is arranged essentially flush with the adjacent exterior surface (19) of the housing (11).

12. Electronic key pursuant to one of the claims 1 to 11, thereby **characterized in that** the independent push-buttons (31 to 33) are made of a metallic material (30) or have a metallic coating.

13. Electronic key pursuant to one of the claims 1 to 12, thereby **characterized in that** the switching element comprises a micro-switch (50).

14. Electronic key pursuant to one of the claims 1 to 12, thereby **characterized in that** the switching element comprises a membrane switch.

15. Electronic key pursuant to one of the claims 1 to 12, thereby **characterized in that** the switching element comprises a hall effect sensor.

16. Electronic key pursuant to one of the claims 1 to 12, thereby **characterized in that** the switching element comprises a capacitive sensor.

17. Electronic key pursuant to one of the claims 1 to 12, thereby **characterized in that** the switching element comprises a compressive force sensor, namely, a piezo element.

18. Electronic key pursuant to one of the claims 1 to 12, thereby **characterized in that** the switching element comprises a snap-action switch.

19. Electronic key pursuant to one of the claims 1 to 12, thereby **characterized in that** the switching element comprises a keypad.

20. Electronic key pursuant to one of the claims 1 to 19, thereby **characterized in that** the two-component element (20) is attached to the top part of the housing (11) by means of gluing, friction welding, clipping, laser and/or by means of ultrasound.

## Revendications

1. Clé électronique
comportant au moins une touche (31 à 33) de forme en soi rigide,
touche qui présente une saillie périphérique (38) en retrait par rapport à la surface (34) d'actionnement de la touche,
sachant que la touche (31 à 33) est agencée dans un orifice (13 à 15) d'un boîtier (11),
sachant que la touche (31 à 33) lorsque actionnée (53) agit sur l'actionneur (51) d'un élément commutateur (50) en assise à l'intérieur (16) du boîtier
et que la saillie périphérique (38) de la touche (31 à 35) interagit, en situation de repos, avec une butée extérieure (18) servant à limiter la course montante de la touche (31 à 33) dans le boîtier (11, 12) et qu'en cas d'actionnement (53) elle heurte une butée intérieure (28) servant à limiter la course descendante de la touche (31 à 33).
et une membrane (21) cédant par déformation lorsqu'on actionne (52) la touche (31 à 33), membrane qui est située entre les touches (31 à 33) et l'actionneur (51) de l'élément commutateur (50),
sachant que la touche (31 à 33) peut, depuis le côté intérieur (16) du boîtier (11) être librement introduite dans l'orifice (13 à 15) du boîtier,
sachant que l'orifice (13 à 15) du boîtier est configuré suffisamment grand pour entourer toute la surface d'actionnement (34) de touche,
sachant que la surface intérieure de la zone périphérique (17) du boîtier (11), zone qui entoure l'orifice (13 à 15) du boîtier, forme la butée extérieure (18) de la touche (31 à 33)
**caractérisée en ce que**
la membrane (21) est la composante molle d'un élément à deux composantes (élément 2C 20), fabriqué à l'aide d'une technique à deux composantes,
**en ce que** la composante dure de l'élément à deux composantes (20) se compose d'un cadre (22) dont les nervure (26) entourent au moins un champ membranaire (40) libre, et
**en ce que** le cadre (26) de l'élément à deux composantes (20) forme la butée intérieure (28) de la touche (31 à 33).

2. Clé électronique selon la revendication 1, **caractérisée en ce que** la touche (31 à 33) est maintenue appuyée en position de repos par une force élastique (29) à l'intérieur (16) du boîtier, là où la saillie (28) en retrait de la touche (31 à 33) repose contre la butée extérieure (18) de la zone périphérique (17) de l'orifice du boîtier (11).

3. Clé électronique selon la revendication 2, **caractérisée en ce que** la forcé élastique (29) de la composante molle (21) de l'élément à deux composantes (20) est générée dans le champ membranaire (40) libre situé entre les nervures (26) du cadre (22) de l'élément à deux composantes (20).

4. Clé électronique selon la revendication 3, **caractérisée en ce que** le champ membranaire (40) de l'élément à deux composantes (20) est voûté (43 à 45) en pot en direction de la touche (31 à 33),
**en ce qu'**en cas de montage, le côté extérieur du fond (47) de pot généré par la voûte membranaire (43 à 45) applique contre la face inférieure (52) de la touche (31 à 33)
et **en ce que** lorsqu'on actionne (53) la touche (31 à 33), la voûte membranaire (43 à 45) cède élastiquement pour pouvoir l'enfoncer, et génère ainsi au moins une partie de la force élastique (29) nécessaire pour rappeler la touche (31 à 33).

5. Clé électronique selon la revendication 4, **caractérisée en ce que** sur la face inférieure (48) du fond (47) de pot de la voûte membranaire (43 à 45) est modelé un poussoir (27) qui transmet la course d'actionnement (53) de la touche (31 à 33) à l'actionneur (51) du microrupteur (50).

6. Clé électronique selon l'une des revendications 2 à 5, **caractérisée en ce que** la force élastique (29) requise pour la touche (31) est générée au moins en partie par la force de rappel de l'actionneur (51) inhérente à l'élément de commutation (50).

7. Clé électronique selon l'une des revendications 1 à 6, **caractérisée en ce que** la butée intérieure (28) est formée par un gradin (55) dans la zone nervurée (56) du cadre (22) limitrophe du champ membranaire (40) libre de l'élément à deux composantes (20),
et **en ce que** le gradin (55) officiant de butée se trouve plus bas que l'arête supérieure (49) du cadre de l'élément à deux composantes (20).

8. Clé électronique selon l'une des revendications 1 à 7, **caractérisée en ce qu'**en cas de montage l'élément à deux composantes (20) applique par l'arête supérieure (49) de son cadre contre une surface intérieure (39) du boîtier (11).

9. Clé électronique selon l'une des revendications 1 à 8, **caractérisée en ce que** la butée extérieure (18) contre la surface intérieure de la zone périphérique (17) de l'orifice (13 à 15) du boîtier se compose d'un gradin antagoniste,
gradin qui est formé en réduisant l'épaisseur (36) du boîtier dans cette zone périphérique (17) par rapport aux zones (37) de boîtier voisines.

10. Clé électronique selon l'une des revendications 1 à 9, **caractérisée en ce que** la touche (31 à 33) présente au moins localement sur le contour de sa surface (34) d'actionnement de touche une bride (35) en retrait officiant de saillie périphérique (38) et qui en situation de repos applique contre la butée extérieure (18) du boîtier (11).

11. Clé électronique selon la revendication 10, **caractérisée en ce que** la bride (35) est en retrait d'un quantum faisant que la surface (34) d'actionnement de touche est agencée, en situation de repos, essentiellement à ras de la surface extérieure (19), limitrophe, du boîtier (11).

12. Clé électronique selon l'une des revendications 1 à 11, **caractérisée en ce que** les touches indépendantes (31 à 33) sont en matériau métallique (30) ou présentent un revêtement métallique.

13. Clé électronique selon l'une des revendications 1 à 12, **caractérisée en ce que** l'élément commutateur consiste en un microrupteur (50).

14. Clé électronique selon l'une des revendications 1 à 12, **caractérisée en ce que** l'élément commutateur consiste en un commutateur à membrane.

15. Clé électronique selon l'une des revendications 1 à 12, **caractérisée en ce que** l'élément commutateur consiste en un capteur à effet Hall.

16. Clé électronique selon l'une des revendications 1 à 12, **caractérisée en ce que** l'élément commutateur consiste en un capteur capacitif.

17. Clé électronique selon l'une des revendications 1 à 12, **caractérisée en ce que** l'élément commutateur consiste en un capteur de force de compression, à savoir un élément piézo-électrique.

18. Clé électronique selon l'une des revendications 1 à 12, **caractérisée en ce que** l'élément commutateur consiste en un commutateur à déclic.

19. Clé électronique selon l'une des revendications 1 à 12, **caractérisée en ce que** l'élément commutateur consiste en une natte commutatrice.

20. Clé électronique selon l'une des revendications 1 à 19, **caractérisée en ce que** l'élément à deux composantes (20) est fixé contre la partie supérieure (11) du boîtier par collage, soudage frictionnel, clipsage, traitement laser et/ou ultrasonique.
